# EUROPEAN PATENT APPLICATION

(11) **EP 4 268 692 A1**
(43) Date of publication of application: **01.11.2023**
(21) Application number: 21908340.9
(22) Date of filing: 15.03.2021
(51) Int. Cl.: A47J 43/046

(54) **FOOD PROCESSOR**

(30) Priority: 25.12.2020 CN 202011566243
(71) Applicant: Kingclean Electric Green Technology (Suzhou) Co., Ltd., Suzhou, Jiangsu 215000 (CN)
(72) Inventor: LI, Xuefeng, Suzhou, Jiangsu 215000 (CN); LI, Zekun, Suzhou, Jiangsu 215000 (CN)
(74) Representative: Mewburn Ellis LLP
(86) International application number: PCT/CN2021/080763
(87) International publication number: WO 2022/134327

(57) **Abstract**

A food processor (1000), relating to the technical field of household electric appliances. The food processor (1000) comprises a base (200) for assembling a cup body (10); the base (200) has a tray (2002) protruding from the base (200), and a blocking portion (2001) is convexly provided in the tray (2002); the bottom of the cup body (10) can be seated in the tray (2002); the cup body (10) is provided with a cutter (30) and a locking block (20) for mounting the cutter (30) on the cup body (10); the locking block (20) is movably connected to the cup body (10) and can rotate circumferentially with respect to the cup body (10); in a first state of the cutter (30), the cutter (30) is not mounted in place with respect to the cup body (10), and the locking block (20) is lapped on the blocking portion (2001); in a second state of the cutter (30), the cutter (30) is mounted in place with respect to the cup body (10), and the locking block (20) is rotated to a position circumferentially deviated from the blocking portion (2001). The food processor (1000) is provided with a blocking portion (2001) on the base (200), and the blocking portion (2001) and the locking block (20) interfere with each other, thereby not only effectively determining whether the locking block (20) and the cutter (30) are mounted in place with respect to the cup body (10), but also ensuring that the locking block (20) is in a stably mounted state with respect to the cup body (10), so that the use safety is improved and potential safety hazards are reduced.

## Description

### TECHNICAL FIELD

The present disclosure relates to the technical field of household appliances, in particular to a food processor.

### BACKGROUND

Currently, multifunctional food processors are more and more widespread in the market. A cutter is mounted in the food processor, and operations such as chopping or stir-frying of food materials are performed by rotation of the cutter, and the food processor also has a heating function to better meet user requirements. In actual use, the cutter needs to be disassembled frequently for cleaning, and the cutter needs to be reassembled when the food processor is to be used again or after being cleaning. Therefore, in this process, there are the following problems to be solved urgently. When a user assembles the cutter after the cutter is cleaned, a cutter locking block configured to lock the cutter is not assembled in place relative to a cup body and the cutter, so that the cutter locking block is loosen during use, and the cutter is loosened, thereby causing a safety problem.

### SUMMARY

Accordingly, it is necessary to provide a food processor to address a technical problem that a cutter is assembled unfirmly in the prior art, which leads to a potential safety hazard.

A food processor includes a base configured to assemble a cup body. The base includes a receiving portion, and the receiving portion is provided with a blocking portion. The bottom of the cup body is capable of being received the receiving portion, the cup body is provided with a cutter and a cutter locking block configured to assemble the cutter on the cup body, the cutter locking block is movably connected to the cup body and capable of rotating circumferentially relative to the cup body. In a first state of the cutter, the cutter is not assembled in place relative to the cup body, and the cutter locking block is overlapped with the blocking portion. In a second state of the cutter, the cutter is assembled in place relative to the cup body, and the cutter locking block is rotated to a position circumferentially deviating from the blocking portion.

In one of the embodiments, the blocking portion extends along at least a part of a rotation path of the cutter locking block.

Such configuration can ensure that the cutter locking block can interfere with the blocking portion in a path deviated from an in-place position along the circumferential direction, so that an interference range is increased.

In one of the embodiments, the food processor further includes a pushing member mounted on the cup body, the pushing element is capable of apply a pushing force to the cutter locking block in a direction opposite to a locking direction of the cutter locking block. In the first state, the pushing member pushes the cutter locking block to rotate to a position overlapping with the blocking portion. In the second state, the pushing force of the pushing member is equal to or less than a locking force of the cutter locking block relative to a cup bottom of the cup body.

In other words, an acting force for pushing the cutter locking block away from the in-place position can be applied to the cutter locking block through the pushing member, and only after the cutter locking block is locked at the in-place position, the pushing member cannot push the cutter locking block to deviate, so that the use safety and flexibility are improved.

In one of the embodiments, the pushing member includes a pushing block and a first elastic member connected to the pushing block, and an end of the first elastic member away from the pushing block is connected to the cup body.

In other words, the pushing block is always applied with the acting force for pushing the cutter locking block to deviate from the in-place position through the first elastic member.

In one of the embodiments, the cutter locking block includes a locking portion and an extension arm connected to the locking portion, the locking portion is provided with an accommodating cavity extending along an axial direction thereof, the cutter extends through the cup bottom of the cup body and the accommodating cavity and is assembled to the cup body through the cutter locking block. In the first state of the cutter, the extension arm is overlapped with the blocking portion. In the second state of the cutter, the extension arm presses the blocking portion.

Such configuration, the extension arm can directly interfere with the blocking portion, the mounting of the cutter locking block relative to the cup body is not affected, and a position interference between the cutter locking block and the blocking portion is facilitated.

In one of the embodiments, a side wall of the accommodating cavity is provided with a first locking slope, the cutter includes a cutter seat and a cutter body mounted at an end of the cutter seat, and the cutter seat is provided with a locking protrusion extending outward along a radial direction thereof. The cutter seat is capable of extending through the accommodating cavity and the cup bottom. When the cutter locking block rotates along a first direction, the locking protrusion presses the first locking slope, and the cutter is locked relative to the cup body. When the cutter locking block rotates along a second direction, the locking protrusion is disengaged from the first locking slope, and the cutter is unlocked relative to the cup body.

In such configuration, the cooperation between the cutter and the cutter locking block can be achieved through the cooperation of the first locking slope and the locking protrusion, so that the disassembly operation and assembly operation of the cutter relative to the cup body can be achieved.

In one of the embodiments, the food processor further includes a locking ring provided in the accommodating cavity. The locking ring is capable of rotating simultaneously with the cutter locking block and moving along an axis of the cutter locking block relative to the cutter locking block, and an inner wall of the locking ring is provided with a second locking slope. The cutter includes a cutter seat and a cutter body mounted at one end of the cutter seat, and the cutter seat is provided with a locking protrusion extending outwards along a radial direction thereof. The cutter seat is capable of extending through the locking ring and the cup bottom. When the cutter locking block is rotated along a first direction, the locking protrusion presses the second locking slope, and the cutter is locked relative to the cup body. When the cutter locking block rotates along a second direction, the locking protrusion is disengaged from the second locking slope, and the cutter is unlocked relative to the cup body.

In other words, the locking between the cutter and the cutter locking block is achieved through the locking between the second locking slope on the locking ring and the locking protrusion on the cutter seat, so that the disassembly operation and assembly operation of the cutter relative to the cup body is achieved.

In one of the embodiments, the cup body has a mounting hole allowing the cutter seat to extend through, an edge of the mounting hole is provided with a notch, and the locking protrusion is capable of extending through the notch to press the first locking slope or the second locking slope.

Such configuration facilitates the cutter seat with the locking protrusion to extend into the accommodating cavity of the cutter locking block through the cup bottom and to be in compression fit with the first locking slope on the cutter locking block or the second locking slope on the locking ring.

In one of the embodiments, the cutter seat is of a polygonal prism structure, and the mounting hole is in a polygonal shape adapted to the cutter seat.

In other words, the cutter seat with the polygonal structure can simplify the structure of the cutter seat while the locking of the cutter seat relative to the cup body is met.

In one of the embodiments, a side of the cutter locking block facing a cup opening is provided with a flange, an end of the locking ring is capable of pressing the flange, and a second elastic member is provided between the flange and the locking ring. In the first state, the second elastic member is in a loose state. In the second state, the second elastic member is compressed between the flange and the locking ring.

The flange provides a mounting position for mounting the second elastic element relative to the cutter locking block and the locking ring, and facilitates the locking ring to drive the cutter locking block to move towards the cup bottom, so that the cutter locking block tightly presses the cup bottom.

In one of the embodiments, a side of the cutter facing the cup bottom is provided with a sealing ring. In the second state, the seal ring is pressed between the cutter and the cup bottom.

In other words, the sealing ring can block the mounting hole and the notch of the cup bottom, so that the cutter is ensured to be in sealing connection with the cup bottom and further ensured to be locked relative to the cup body.

The present invention has the advantages that:

The food processor provided by the present invention includes a base configured to assemble a cup body. The base is provided with a tray which protrudes from the base, and a blocking portion is protruded in the tray. The bottom of the cup body can be connected in the tray, the cup body is provided with the cutter and the cutter locking block for assembling the cutter to the cup body, and the cutter locking block is movably connected to the cup body and can rotate relative to the cup body in the circumferential direction. In the first state of the cutter, the cutter is not assembled in place relative to the cup body, and the cutter locking block is overlapped with the blocking portion. In the second state of the cutter, the cutter is assembled in place relative to the cup body, and the cutter locking block is rotated to a position that deviates from the blocking portion. In actual use, when the cutter lock block is not assembled in place relative to the cup body, because the cup body and the base have an assembly relationship, when the assembly of the cup body and the base is satisfied, the blocking portion which protrudes from the receiving portion can interfere with the cup body which is not assembled in place, that is, the cutter locking block is overlapped with the blocking portion, so that the assembly of the cup body relative to the base is blocked, and the cup body cannot be normally assemble to the base. At the same time, when the cutter is not assembled in place relative to the cup body, the position of the cutter locking block relative to the cup body will be affected finally, that is, the cutter locking block is not assembled in place relative to the cup body, and at this time, the blocking portion will also interfere with the cutter locking block which is not assembled in place, so as to affect the assembly of the cup body relative to the base. Moreover, after the cutter locking block is assembled in place relative to the cup body, the cutter locking block can be rotated to the position that deviates from the blocking portion, the cup body can be just matched with the base, the bottom of the cup body can be firmly accommodated in the receiving portion, and the blocking portion can block the rotation of the cutter locking block relative to the cup body, so that the cutter locking block can be firmly assembled relative to the cup body. In other words, according to the food processor, the blocking portion is provided on the base, and the mutual interference effect of the blocking portion and the cutter locking block is utilized, so that whether the cutter locking block and the cutter are assembled in place relative to the cup body can be effectively determined, and the cutter locking block can be ensured to be in a firm assembly state relative to the cup body, so that the use safety is improved, and the potential safety hazard is reduced.

### BRIEF DESCRIPTION OF THE DRAWINGS

FIG. 1 is an assembled schematic view of a food processor according to an embodiment of the present invention.
FIG. 2 is an unassembled schematic view of the food processor according to an embodiment of the present invention.
FIG. 3 is a schematic view of a base of the food processor according to an embodiment of the present invention.
FIG. 4 is a schematic view of a cup assembly of the food processor according to an embodiment of the present invention.
FIG. 5 is a partial bottom view of the cup assembly of the food processor according to an embodiment of the present invention.
FIG. 6 is a first partial view of the cup assembly of the food processor according to an embodiment of the present invention.
FIG. 7 is a second partial view of the cup assembly of the food processor according to an embodiment of the present invention.
FIG. 8 is a partial cross-sectional view of the cup assembly of the food processor according to an embodiment of the present invention.
FIG. 9 is a first partial exploded view of the cup assembly of the food processor according to an embodiment of the present invention.
FIG. 10 is a second partial exploded view of the cup assembly of the food processor according to an embodiment of the present invention.
FIG. 11 is a third partial view of the cup assembly of the food processor according to an embodiment of the present invention.
FIG. 12 is a fourth partial view of the cup assembly of the food processor according to an embodiment of the present invention.

Reference numerals: 10-cup body; 11-cup bottom; 12-receiving groove; 13-opening; 14-track groove; 15-mounting opening; 16-pushing member; 17-partition plate; 20-cutter locking block; 21-extension arm; 22-holding arm; 23-hook; 24-flange; 25-accommodating cavity; 30-cutter; 3 1-cutter body; 32-cutter seat; 33-rotating shaft; 40-locking ring; 41-abutting protrusion; 50-sealing ring; 61-first locking protrusion; 62-first locking groove; 63-second locking protrusion; 64-second locking groove; 70-second elastic member; 100-cup assembly; 101-cooking cup; 102-cup holder; 1011-cooking cavity; 1021-mounting cavity; 111-mounting hole; 1111-notch; 161-pushing block; 162-first elastic member; 200-base; 321-locking protrusion; 322-boss; 411-second locking slope; 412-abutting plane; 1000-food processor; 10211-upper cavity; 10212-lower cavity; 2001-blocking portion; 2002-tray.

### DETAILED DESCRIPTION OF THE EMBODIMENTS

In order to make the above objects, features and advantages of the present application more obvious and easier to understand, the specific embodiments of the present application are described in detail below in combination with the accompanying drawings. Many specific details are set forth in the following description to facilitate a full understanding of the invention. However, the present application can be implemented in many ways different from those described herein, and those skilled in the art can make similar improvements without violating the connotation of the invention. Therefore, the invention is not limited by the specific embodiments disclosed below.

In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuth or position relationship shown in the attached drawings, which is only for the convenience of describing the present application and simplifying the description, rather than indicating or implying that the device or element must have a specific azimuth, be constructed and operated in a specific azimuth, so it cannot be understood as a limitation of the present application.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present application, "multiple" means at least two, such as two, three, etc., unless otherwise expressly and specifically defined.

In the present invention, unless otherwise expressly specified and limited, the terms "mount", "connect", "contact", "fix" and other terms should be understood in a broad sense, for example, they can be fixed connections, removable connections, or integrated. It can be mechanical connection or electrical connection. It can be directly connected or indirectly connected through an intermediate medium. It can be the connection within two elements or the interaction relationship between two elements, unless otherwise expressly limited. For those skilled in the art, the specific meaning of the above terms in the present application can be understood according to the specific situation.

In the present invention, unless otherwise expressly specified and limited, the first feature "above" or "below" the second feature may be in direct contact with the first and second features, or the first and second features may be in indirect contact through an intermediate medium. Moreover, the first feature is "above" the second feature, but the first feature is directly above or diagonally above the second feature, or it only means that the horizontal height of the first feature is higher than the second feature. The first feature is "below" of the second feature, which can mean that the first feature is directly below or obliquely below the second feature, or simply that the horizontal height of the first feature is less than that of the second feature.

It should be noted that when an element is called "fixed to" or "provided on" another element, it can be directly on another element or there can be a centered element. When an element is considered to be "connected" to another element, it can be directly connected to another element or there may be intermediate elements at the same time. The terms "vertical", "horizontal", "up", "down", "left", "right" and similar expressions used herein are for the purpose of illustration only and do not represent the only embodiment.

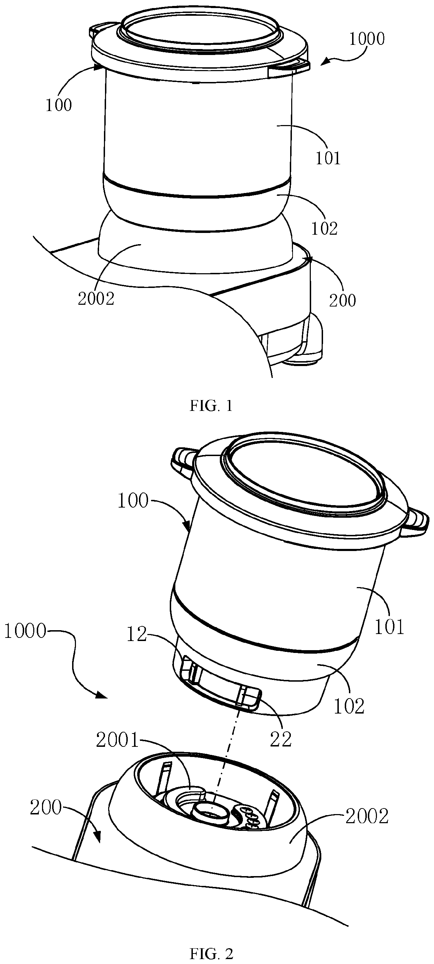

As shown in FIG. 1 and FIG. 2, a food processor 1000 according to an embodiment of the present invention is mainly configured to cook food in a kitchen. The food processor 1000 includes a cup assembly 100 and a base 200. The cup assembly 100 is mounted on the base 200, and the cup assembly 100 is detachably connected to the base 200, that is, the cup assembly 100 can be detached from the base 200, and can also be assembled to the base 200. Specifically, the cup assembly 100 has a cooking cavity 1011 in which ingredients are placed. The base 200 is configured to be connected to a power supply, so as to switch on current to cook the ingredients in the cooking cavity 1011. Generally, a cup body 10 of the cup assembly 100 is further provided with a cutter 30, and a cutter body 31 of the cutter 30 extends into the cooking cavity 1011. The base 200 is connected to the power supply to enable the cutter 30 to be driven, so that the cutter body 31 of the cutter 30 can rotate in the cooking cavity 1011 to chop or stir-fry the ingredients. An outer sidewall of the cup assembly 100 is provided with a handle, so as to be convenient for a user to hold the cup assembly 100. For example, when the ingredients are cooked in the cooking cavity 1011, the user can hold the handle to pick up the cup assembly 100 relative to the base 200 and tilt the cup assembly 100, so as to pour out the ingredients in the cooking cavity 1011 to a food container. The cup assembly 100 further includes a cover buckled at an opening of the cooking cavity 1011, and the cover is configured to block the opening of the cooking cavity 1011, so that the ingredients will not spill out from the opening under an action of the cutter 30, and also to provide protection for the user. Alternatively, a spout may be provided on a side wall of the cup assembly 100, and the prepared food can be poured out from the spout. At the same time, a foot pad is provided on a side of the base 200 away from the cup assembly 100, and the foot pad is protruded from a bottom surface of the base 200. Such a configuration can ensure that there is a heat dissipation space between the base 200 and a shelf for placing the food processor 1000, which is beneficial to heat dissipation of the base 200, thereby reducing the risk of heat generated by the base 200 and even burning of internal electronic devices. In addition, since most of heat dissipation mechanisms on the base 200 are located on a side of the base 200 facing the shelf, the heat dissipation space is more conducive to the heat dissipation mechanism to contact with an outside air to dissipate heat. In addition, a side of the foot pad away from the base 200 is provided with an anti-friction pad, so as to increase a friction force of the base 200 relative to the shelf, thereby improving the stability of the food processor 1000 during operation.

In the following, the specific structure of the cup assembly 100 will be described. As shown in FIGS. 1, 2, 4, 5, 7, 8, 9, 10, 11, and 12, the cup assembly 100 includes a cup body 10, a cutter locking block 20, and a cutter 30. Taking the cup body 10 with an approximate cylindrical structure as an example, when the cutter 30 is mounted on the cup body 10 through the cutter locking block 20, an axis of the cutter 30, an axis of the cutter locking block 20, and an axis of the cup body 10 are coincided. The cutter locking block 20 is mounted on the cup body 10, and the cutter locking block 20 is capable of rotating relative to the cup body 10 to lock the cutter 30 on the cup body 10 or disengages the cutter 30 from the cup body 10.

Specifically, the cup body 10 includes a cooking cup 101 and a cup holder 102 mounted below the cooking cup 101. The cup seat 102 is usually made of plastic. The cooking cup 101 is provided with a cooking cavity 1011 configured to accommodate the ingredients. The cup holder 102 is provided with a mounting cavity 1021, and a cup bottom 11 of the cooking cup 101 is accommodated in the mounting cavity 1021. In an embodiment, a partition plate 17 is mounted in the mounting cavity 1021 to divide the mounting cavity 1021 into an upper cavity 10211 and a lower cavity 10212. The cup bottom 11 of the cooking cup 101 is located in the upper cavity 10211, and the cutter locking block 20 is located in the lower cavity 10212. The cup bottom 11 of the cooking cup 101 is provided with a mounting hole 111 configured to allow the cutter 30 to extend through, and a central position of the partition plate 17 is provided with a cutter mounting hole configured to mount the cutter locking block 20, so that a side of the cutter 30 away from the cutter body 31 can extend out of the cup bottom 11 of the cup body 10, and can cooperate with a transmission structure on the base 200 to drive the cutter 30.

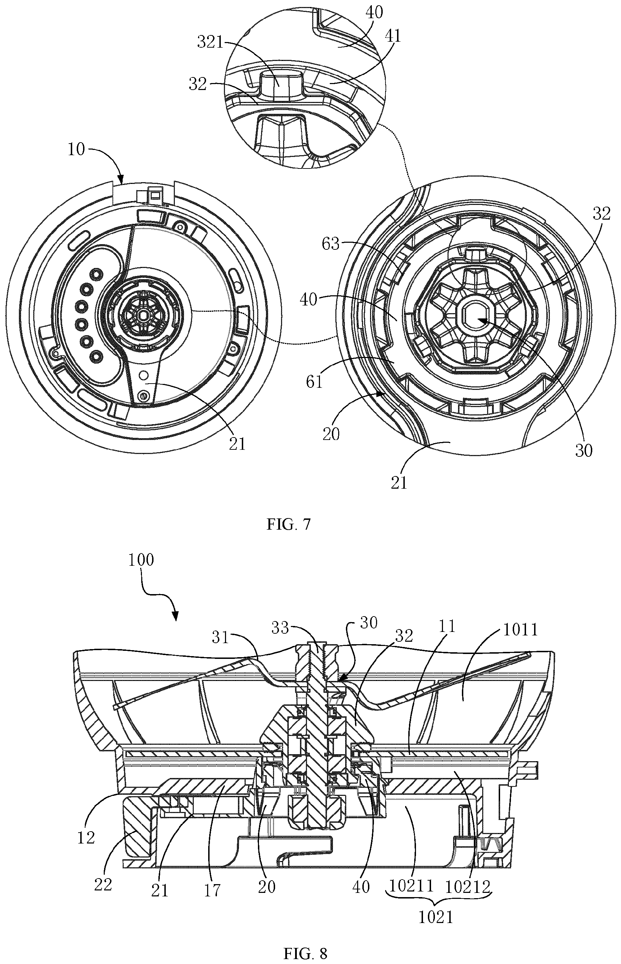

It should be noted that, as shown in FIG. 8, the cutter 30 includes a cutter body 31, a cutter seat 32, and a rotating shaft 33. One end of the rotating shaft 33 is rotatably connected to the cutter seat 32, and extends through the cutter seat 32 to be connected to a drive motor on the base 200. The other end of the rotating shaft 33 is connected to the cutter body 31. In actual use, the base 200 is connected to a power supply, and the drive motor is activated to drive the rotating shaft 33 to rotate around an axis of the rotating shaft 33. The cutter body 31 rotates simultaneously with the rotating shaft 33 to chop and stir the ingredients. Therefore, a portion of the rotating shaft 33 connected to the cutter body 31 and the cutter body 31 are both located in the cooking cavity 1011, and the cutter seat 32 needs to extend through the cup bottom 11 of the cooking cup 101 to be locked with the cutter locking block 20 located in the mounting cavity 1021, so as to achieve the mounting of the cutter 30 relative to the cooking cup 101.

In one embodiment, the cutter locking block 20 is provided with an accommodating cavity 25 penetrating along an axial direction thereof, and a flange 24 is formed at an upper opening of the accommodating cavity 25 and extends inward in a radial direction of the cutter locking block 20. A wall of the accommodating cavity 25 is provided with a first locking slope along a circumferential direction of the cutter locking block 20, and the cutter seat 32 is correspondingly provided with a locking protrusion 321 extending outward along a radial direction of the cutter seat 32. When the cutter 30 is mounted to the cup body 10, the cutter seat 32 extends through the cup bottom 11 of the cooking cup 101 and the cutter locking block 20, so that the locking protrusion 321 on the cutter seat 32 is located below the first locking slope, and then the cutter locking block 20 is rotated clockwise around the axis of the cutter locking block 20, so that the locking protrusion 321 gradually presses the first locking slope, and the first locking slope exerts a downward force on the locking protrusion 321.The cup bottom 11 of the cooking cup 101 exerts an upward supporting force on the cutter seat 32, so that the locking protrusion 321 exerts an upward locking force on the first locking slope, thereby causing the cutter locking block 20 to abut upwards against the cup bottom 11 of the cooking cup 101, and the cutter locking block 20 presses the cup bottom 11 of the cooking cup 101 through a mutual cooperation between the first locking slope, the locking protrusion 321 and the cup bottom 11 of the cooking cup 101.Thus, a locking of the cutter 30 relative to the cutter locking block 20, that is, a locking of the cutter 30 relative to the cup body 10, is achieved. When the cutter locking block 20 is rotated counterclockwise around the axis of the cutter locking block 20, the locking protrusion 321 can be gradually loosened from the first locking slope, and the locking force is gradually reduced along with a rotation of the cutter locking block 20, so that the cutter 30 can be detached from the cup body 10.

The counterclockwise rotation unlocking and the clockwise rotation locking of the cutter locking block 20 are both related to an inclination direction of the first locking slope, so that the rotation direction needs to be selected according to an actual situation to achieve the locking and unlocking of the cutter 30 relative to the cup body 10. Of course, it is not limited that the counterclockwise rotation is for unlocking and the clockwise rotation is for locking, but also the clockwise rotation is for unlocking and the counterclockwise rotation is for locking.

As shown in FIGS. 7 to 10, in another embodiment, the accommodating cavity 25 of the cutter locking block 20 is of a cylindrical structure with openings at both ends, and a locking ring 40 is further provided in the accommodating cavity 25. The locking ring 40 can be supported on the flange 24 and rotate simultaneously with the cutter locking block 20. That is to say, the locking ring 40 is further provided between the cutter seat 32 and the cutter locking block 20, and the cutter seat 32, the locking ring 40, and the cutter locking block 20 are sequentially wrapped from inside to outside. The locking ring 40 is mounted on the cutter locking block 20 and is configured to engage with the cutter seat 32. Specifically, an inner wall of the locking ring 40 facing the cutter seat 32 is provided with a second locking slope 411, and the second locking slope 411 is provided on a side of the locking ring 40 away from the cutter body 31. The cutter seat 32 is provided with a locking protrusion 321 extending outward along the radial direction of the cutter seat 32, that is, the cutter seat 32 is provided with the locking protrusion 321 facing the inner wall of the locking ring 40. With the rotation of the cutter locking block 20 relative to the cup body 10, the cutter locking block 20 can drive the locking ring 40 to rotate, and the locking protrusion 321 can press the second locking slope 411, so as to achieve a locking of the cutter seat 32 relative to the locking ring 40.

As shown in FIGS. 7 to 10, in another embodiment, an inner wall of the locking ring 40 facing the cutter seat 32 is provided with an abutting protrusion 41, and the abutting protrusion 41 protrudes from the locking ring 40 along a side facing the axis of the cutter locking block 20. The second locking slope 411 is provided on a side of the abutting protrusion 41 facing the base 200, and extends obliquely from a cup opening to the cup bottom, so as to press the locking protrusion 321. A side of the abutting protrusion 41 facing the base 200 is further provided with an abutting plane 412, and the abutting plane 412 has a smooth transition with the second locking slope 411. The abutting plane 412 is located at the highest position of the abutting protrusion 41 along the locking ring 40. In an embodiment, the abutting protrusion 41 is integrally formed with the second locking slope 411. In actual use, when the locking protrusion 321 is in contact with a lowest portion of the abutting protrusion 41, as the cutter locking block 20 rotates, the locking protrusion 321 gradually moves along the second locking slope 411 and finally moves to the abutting plane 412. Therefore, the cutter locking block 20 and the cutter 30 press the cup body 10, an assembly operation of the cutter is achieved. Conversely, the locking protrusion 321 can be move away from the abutting plane 412 and the abutting protrusion 41 by rotating the cutter locking block 20 reversely, the disassembly of the cutter is achieved.

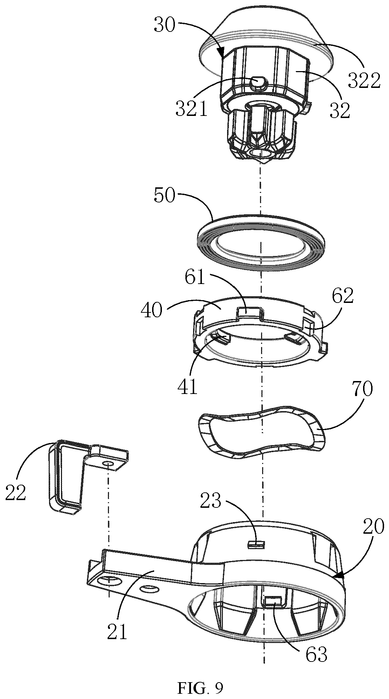

As shown in FIG. 9, specifically, a side of the cutter seat 32 facing the cup bottom 11 of the cooking cup 101 is further provided with a boss 322. When the cutter seat 32 extends through the cup bottom 11 of the cooking cup 101 and the opening of the upper portion of the cutter locking block 20 and cooperates with the locking ring 40 located in the accommodating cavity 25 of the cutter locking block 20, the boss 322 can abuts against the cup bottom 11 of the cooking cup 101. At this time, the locking protrusion 321 extends into the locking ring 40 simultaneously with the cutter seat 32, and the locking protrusion 321 is located below the second locking slope 411. When the cutter locking block 20 is rotated relative to the cup body 10, the locking ring 40 rotates simultaneously with the cutter locking block 20, and the locking protrusion 321 gradually abuts against the second locking slope 411. As the locking block 20 rotates, the second locking slope 411 engages the locking protrusion 321 more and more tightly, so that the cutter 30 is pulled toward a side of the cup bottom 11 of the cooking cup 101, and the boss 322 on the cutter 30 abuts against the side of the cup bottom 11 of the cooking cup 101. At the same time, the cutter seat 32 can exert a pressing force on the second locking slope 411 toward the cup opening, so that the locking ring 40 pushes the cutter locking block 20 toward and abuts against the other side of the cup bottom 11 of the cooking cup 101, thereby achieving a locking assembly between the cutter locking block 20, the cutter 30 and the cup body 10, the assembly operation of the cutter is achieved. When the cutter is to be disassembled, the cutter locking block 20 is rotated reversely relative to the cup body 10.

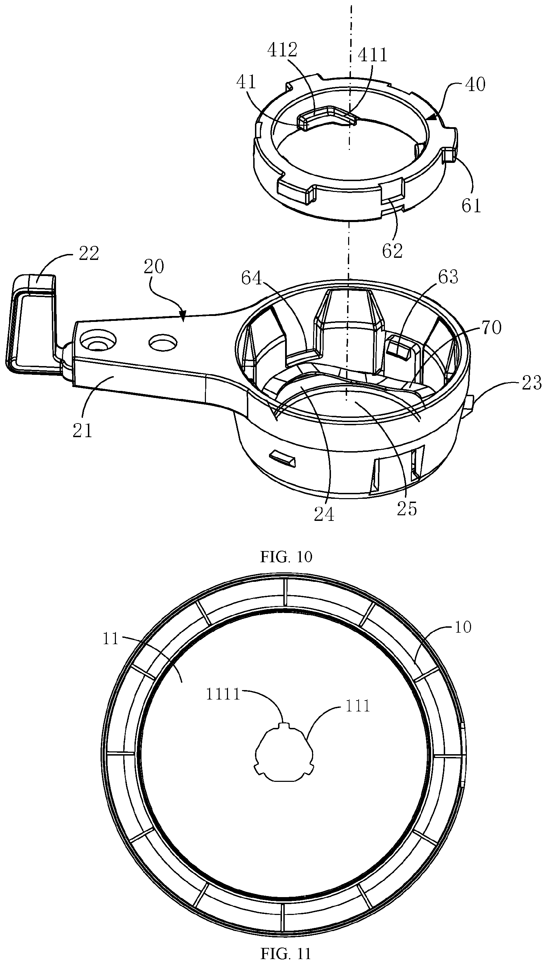

As shown in FIG. 11, in order to facilitate that the locking protrusion 321 can follow the cutter seat 32 to extend through the cup bottom 11 of the food cooking cup 101 and cooperate with the second locking slope 411, an edge of the mounting hole 111 of the cup bottom 11 of the food cooking cup 101 is provided a notch 1111. A size of the notch 1111 corresponds to a size of the locking protrusion 321, and a number of the notch 1111 is also corresponds to a number of the locking protrusion 321, so that that locking protrusion 321 can extends through the notch 1111 along with the cutter seat 32 and cooperate with the locking ring 40.

In an embodiment, the cutter seat 32 is of a polygonal prism structure, and correspondingly, the mounting hole 111 provided on the cup bottom 11 of the cooking cup 101 is also in a corresponding polygonal shape. For example, when the cutter seat 32 is of a hexagonal prism structure, the mounting hole 111 on the cup bottom 11 is of a hexagonal shape. Such a configuration can avoid the problem that the cutter seat 32 rotates when the rotating shaft 33 and the tool body 31 rotate, thereby improving the safety of use. In addition, when the cutter 30 is assembled and disassembled, only the locking protrusion 321 needs to be aligned with the notch 1111, which greatly simplifies the assembly and disassembly of the cutter 30.

As shown in FIG. 9, further, a sealing ring 50 is provided between the boss 322 of the cutter seat 32 and the cup bottom 11, and the sealing ring 50 is sleeved on the cutter seat 32 and is adj acent to the boss 322. When the cutter 30 is locked to the cup bottom 11 of the cooking cup 101 by the locking ring 40, the sealing ring 50 can be tightly pressed between the boss 322 and the cup bottom 11 of the cooking cup 101 to seal the mounting hole 111 and the notch 1111 on the cup bottom 11 of the cooking cup 101, so as to ensure a sealing connection between the cutter 30 and the cup body 10, and the ingredients placed in the cooking cavity 1011 cannot leak into a mounting portion. Moreover, just because the sealing ring 50 is provided, the locking of the cutter seat 32 relative to the cutter locking block 20 is further strengthened. If the sealing ring 50 is not provided between the boss 322 and the cup bottom 11 of the cooking cup 101, the boss 322 is difficult to press the cup bottom 11, so that the ingredients in the cooking cavity 1011 is easy to leak through the mounting hole 1111, and the cutter 30 is difficult to tighten relative to the cup body 10.

It should be added that the locking ring 40 and the cutter seat 32 can also be locked by a threaded connection, or the cutter seat 32 can be directly locked with the cutter locking block 20 by a threaded connection. For example, a cavity wall of the accommodating cavity 25 of the cutter locking block 20 is provided with an internal thread, and an outer side wall of the cutter seat 32 is provided with an external thread, so that the locking of the cutter seat 32 relative to the cutter locking block 20 can be achieved through a cooperation of the internal thread and the external thread, thereby achieving the assembly operation of the cutter 30 relative to the cup body 10. No matter which configuration mode is adopted, as long as it can ensure that the cutter seat 32 is locked and mounted relative to the cutter locking block 20, and at the same time, the cutter seat 32 can be unlocked relative to the cutter locking block 20, so as to achieve the assembly and disassembly of the cutter.

It should be noted that a number of the locking protrusions 321 located on the cutter seat 32 may be a plurality, and the plurality of locking protrusions 321 are spaced apart around an axial direction of the cutter 30. Correspondingly, a number of the abutting protrusions 41 located on the locking ring 40 is also a plurality, and the plurality of abutting protrusions 41 are spaced apart around an axial direction of the locking ring 40, and each abutting protrusion 41 is correspondingly provided with a second locking slope 411 corresponding to one locking protrusion 321. For example, in an embodiment, three locking protrusions 321 are provided, and correspondingly three abutting protrusions 41 are also provided. The three locking protrusions 321 are evenly spaced around the axis of the cutter 30, and the three abutting protrusions 41 are evenly spaced around the axis of the locking ring 40. Of course, four, five, etc., locking protrusions 321 may also be provided, no matter which mode is adopted, as long as the locking protrusions 321 can be matched with the abutting protrusions 41, so as to achieve the assembly and disassembly of the cutter 30.

As shown in FIG. 9 and FIG. 10, in actual use, a side wall of the locking ring 40 facing the cutter locking block 20 is provided with a first locking protrusion 61 and a first locking groove 62, and the first locking protrusion 61 and the first locking groove 62 are spaced apart around the axial direction of the locking ring 40. A side wall of the cutter locking block 20 facing the locking ring 40 is provided with a second locking protrusion 63 and a second locking groove 64, and the second locking protrusion 63 and the second locking groove 64 are spaced apart around an axial direction of the cutter locking block 20. The first locking protrusion 61 can be engaged with the second locking groove 64, and the second locking protrusion 63 can be engaged with the first locking groove 62. In addition, there is an axial movement allowance between the first locking protrusion 61 and the second locking groove 64, and there is also an axial movement allowance between the second locking protrusion 63 and the first locking groove 62, that is, the locking ring 40 and the cutter locking block 20 have a certain axial movement allowance relative to each other. Therefore, when the cutter is assembled, when the cutter locking block 20 drives the locking ring 40 to rotate circumferentially, the locking ring 40 can move toward the cup bottom 11 relative to the cutter locking block 20, and vice versa.

A number of the first locking protrusions 61, the first locking grooves 62, the second locking protrusions 63 and the second locking grooves 64 may be a plurality, the plurality of first locking protrusions 61 and the a plurality of second locking grooves 64 are alternately spaced apart around the axial direction of the locking ring 40, and the plurality of second locking protrusions 63 and the plurality of second locking grooves 64 are alternately spaced apart around the axial direction of the locking cutter block 20.

As shown in FIGS. 7, 9 and 10, in an optional embodiment, a second elastic member 70 is provided between the locking ring 40 and the flange 24 of the cutter locking block 20, and the second elastic member 70 can be abutted against between the locking ring 40 and the cutter locking block 20. When the locking ring 40 moves toward the cup bottom 11 under a second force exerted by the locking protrusion 321, the locking ring 40 can press the second elastic member 70 to cause the second elastic member 70 to deform. During the deformation, the second elastic member 70 can exert a force on an inner edge surface of the cutter locking block 20 facing the cup bottom 11. In such a configuration, when the cutter locking block 20 is rotated, there is a certain resistance action between the cutter locking block 20 and the locking ring 40, so that the user can actually feel the feedback of the resistance action exerted on the cutter locking block 20, thereby improving the user experience. Moreover, by providing the second elastic member 70, the axial movement allowance between the locking ring 40 and the cutter locking block 20 is increased, which helps to improve the smoothness of a locking operation of the cutter 30 without a large resistance.

In one embodiment, the second elastic member 70 is an elastic sheet, a wavy spring ring or a helical spring, as long as it can at least achieve the above functions.

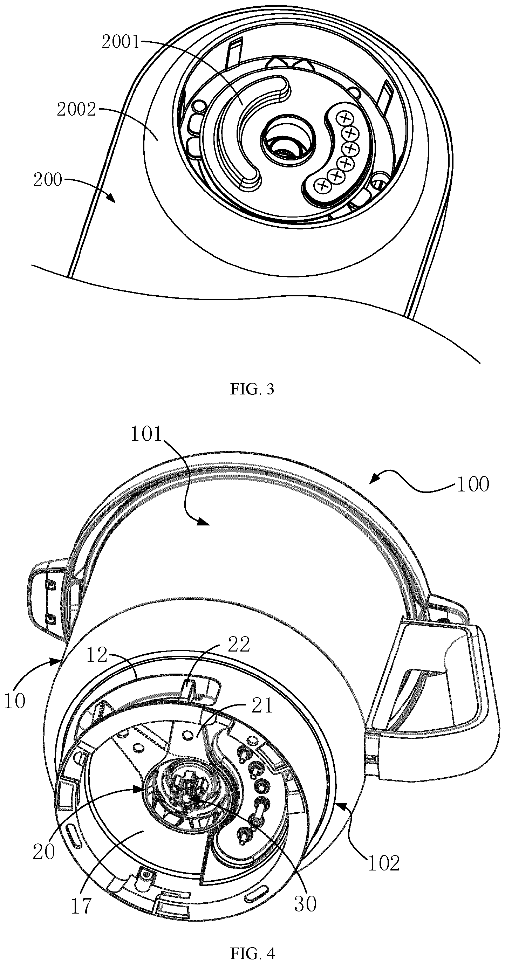

As shown in FIGS. 4 to 10, in an optional embodiment, a side of the cutter locking block 20 has an extension arm 21, and the extension arm 21 extends beyond a side wall of the cup body 10. Since the cutter locking block 20 is rotatably connected to the cup body 10, when the cutter 30 is locked, the cutter locking block 20 is rotated counterclockwise relative to the cup body 10, and when the cutter 30 needs to be disassembled relative to the cutter locking block 20, the cutter locking block 20 is rotated clockwise relative to the cup body 10. In addition, the locking block 20 may be rotated clockwise when locking, and the locking block 20 may be rotated counterclockwise when disassembly. No matter which method is used, as long as it enables the locking and loosening of the cutter 30 relative to the locking block 20 and the locking block 20 relative to the cup 10.

In one embodiment, the extension arm 21 extends radially along the cutter locking block 20 and extends through a sidewall of the cup body 10 to an outside of the cup body 10. In this case, when the cutter 30 is assembled or disassembled, an opening of the cup body 10 is arranged upward, and the extension arm 21 is pulled from an outer side of the side wall of the cup body 10 to rotate the cutter locking block 20, the assembly and disassembly of the cutter 30 can be achieved. The extension arm 21 increases a force arm for rotating the cutter locking block 20, which is convenient for the user to operate. And more importantly, compared with the prior art that the cup body needs to be inverted (i.e., the opening of the cup body faces downward) to rotate the cutter locking block at the bottom of the cup body, in the solution of the present disclosure, since the extension arm 21 extends from the side wall of the cup body 10, the cup body 10 is placed upright (i.e., the opening of the cup body 10 faces upward)when the cutter is disassembled and assembled, the user can hold the extension arm 21 with one hand and support the cup body 10 with the other hand, and exerts a rotating force on the extension arm 21, so as to cause the extension arm 21 to drive the cutter locking block 20 to rotate relative to the cup 10, so that the assembly operation and disassembly operation of the cutter can be achieved, the operations are more convenient, the cup body 10 does not need to be inverted, and the cutter 30 does not fall relative to the cup body 10 due to the disassembly of the cutter 30 by inverting the cup body 10, and even a safety problem is avoided, thereby improving the safety of use of the cup assembly 100.

As shown in FIG. 4 and FIG. 8, further, a side wall of the cup body 10 is provided with a through hole 13. An external environment of the cup body 10 may be in communication with the mounting cavity 1021 through the through hole 13, so that an extending end of the extension arm 21 can extend out of the through hole 13. When the cutter 30 is assembled and disassembled relative to the cutter locking block 20, the extension arm 21 moves along the through hole 13 under a force from the user, and the extension arm 21 drives the cutter locking block 20 to rotate relative to the cup body 10. The through hole 13 is an elongated hole, and a length of the through hole 13 extends along an axial direction of the cup body 10 to form an arc-shaped. The length of the through hole 13 is just within a rotation range of the cutter locking block 20 when the cutter 30 is locked relative to the cutter locking block 20.

In other embodiments, instead of providing the through hole 13 on the sidewall of the cup body 10, the extension arm 21 may be bent to extend beyond a lower edge of the cup holder 102 and extend to the outside of the side wall of the cup body 10. This also enables the extension arm 21 to be pulled from the outer side of the side wall of the cup body 10, and further enables the cutter locking block 20 to rotate, the assembly and disassembly of the cutter 30 can be achieved.

As shown in FIGS. 4, 6 and 8, in some embodiments, the side wall of the cup body 10 is provided with an accommodating groove 12, the accommodating groove 12 is recessed towards a direction adjacent to the axis of the cup body 10 and is in communication with the mounting cavity 1021. A portion of the extension arm 21 extending out of the mounting cavity 1021 can be accommodated in the accommodating groove 12. In other words, the accommodating groove 12 is mainly configured to provide a storage space for the portion of the extension arm 21 extending out of the mounting cavity 1021. Because the cup body 10 is engaged with the base 200, in order to ensure that the extension arm 21 does not interfere with the cooperation between the cup body 10 and the base 200, the accommodating groove 12 is configured to receive an extension portion of the extension arm 21, and a receiving portion is configured on the sidewall of the cup body 10, so as to ensure that the cup body 10 can be normally assembled relative to the base 200.

As shown in FIG. 4, FIG. 6, FIG. 8, FIG. 9 and FIG. 10, a length of the accommodating groove 12 extends along a circumferential direction of the cup body 10 to form a semi-arc groove. The extension portion extending from the through hole 13 is accommodated in the accommodating groove 12. The through hole 13 is provided on a side of the accommodating groove 12 facing the cup opening. At this time, an end of the extension arm 21 is provided with a bent flange, and the bent flange is bent towards a bottom of the cup and is accommodated in the accommodating groove 12. Alternatively, the through hole 13 is provided on a side of the accommodating groove 12 facing the cup bottom, and the bent flange is bent towards the cup opening and is accommodated in the accommodating groove 12. Alternatively, an L-shaped holding arm 22 is mounted at the extension end of the extension arm 21, and the holding arm 22 can be positioned upright or inverted according to a position of the through hole 13 relative to the accommodating groove 12, and the holding arm 22 can also be configured as a bent flange, as long as it can be easily operated by the user.

When the holding arm 22 is used, the holding arm 22 may be made of metal material and fastened to the extension arm 21 by a fastener such as a screw. The holding arm 22 can rotate in the accommodating groove 12, so that the cutter locking block 20 can rotate within a certain angle, and the cutter 30 can be disassembled and assembled.

Of course, the side wall of the cup body 10 may also be provided with an accommodating hole extending through the side wall of the cup body 10, and a length of the accommodating hole extends along the circumferential direction of the cup body 10. When the cutter locking block 20 rotates relative to the cup body 10, the extension arm 21 can move in the accommodating hole. In other words, the side wall of the cup body 10 is provided with a long arc-shaped hole extending along the circumferential direction of the cup body 10, i.e., the above-mentioned accommodating hole, and the extension end of the extension arm 21 directly extends from the mounting cavity 1021 of the cup body 10 and extends through the accommodating hole. When the cutter locking block 20 rotates relative to the cup body 10, the extension arm 21 moves simultaneously with the cutter locking block 20 in the accommodating hole along the arc-shaped extension length of the accommodating hole.

It should be noted that, when the extension arm 21 is connected to the L-shaped holding arm 22, the cutter locking block 20 needs to be mounted into the mounting cavity 1021 first, and the extension arm 21 faces the through hole 13. One end of the holding arm 22 extends into the mounting cavity 1021 through the through hole 13, and the extension arm 21 and the holding arm 22 are fixed by a fastener such as a screw.

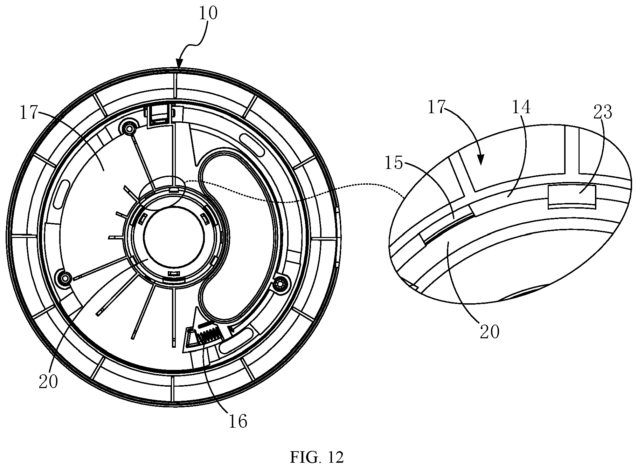

As shown in FIG. 12, in an optional embodiment, a locking portion is provided on the outer side wall of the cutter locking block 20 away from the locking ring 40, and correspondingly, a track groove 14 is provided on a side of the partition plate 17 facing the upper cavity 10211 around an edge of the cutter mounting hole on the partition plate 17. When the cutter locking block 20 is mounted in the accommodating cavity 1021, the locking portion is snapped into the track groove 14, and the locking portion can move in the track groove 14 as the locking block 20 rotates relative to the cup body 10. Specifically, the locking portion may be a hook 23, the track groove 14 is provided with a mounting opening 15, and the hook 23 extends through the mounting opening 15 and is snapped into the track groove 14. In actual use, the cutter locking block 20 has a bowl-shaped structure with a large diameter end and a small diameter end. The small diameter end of the cutter locking block 20 extends into the mounting cavity 1021 from the opening of the cup body 10. In the process of extension, the cutter locking block 20 is rotated to enable the hook 23 to just extend through the mounting opening 15, and then the cutter locking block 20 is rotated again to enable the hook 23 to be offset relative to the mounting opening 15 and move into the track groove 14.

At least three mounting openings 15 are provided, the at least three mounting openings 15 are spaced apart around an axial direction of the track groove 14, and the track groove 14 is provided around an axial direction of the opening on the cup bottom. Correspondingly, at least three hooks 23 are also provided, and each hook 23 corresponds to one mounting opening 15.

It should be noted that when three or more hooks 23 are provided, only one hook 23 is located within a range of the through hole 13 of the cup body 10, so as to prevent the cutter locking block 20 from being separated from the cup seat 102 due to the hook 23 being separated from the cup seat 102 through the mounting opening 15 when the cutter locking block 20 is rotated. In other words, when the cutter is disassembled and assembled, the cutter locking block 20 can only rotate within a certain angle due to the mutual cooperation of the through hole 13 on the cup body 10 and the holding arm 22, and the cooperation of the mounting opening 15 on the cup seat 102 and the hook 23 on the cutter locking block 20, so that the cutter 30 can be disassembled and assembled relative to the cup body 10, but the cutter locking block 20 will not be easily disassembled relative to the cup body 10, thereby realizing the purpose that the cutter locking block 20 does not need to be disassembled simultaneously when the cutter 30 is disassembled and assembled, so as to ensure that the cutter lock block 20 is not easily lost when disassembling the cutter.

The present invention further provides a food processor 1000, which includes a base 200 and the foregoing cup assembly 100. After the cutter 30 is locked relative to the cutter locking block 20, the cup assembly 100 can also be placed on the base 200 for use. However, if the cutter 30 is not mounted in place relative to the cutter locking block 20, it is inevitable that the cutter 30 will become loose and even cause safety problems when the cutter 30 is in use. Moreover, even if the cutter 30 is mounted in place relative to the cutter locking block 20 and the cutter locking block 20 is mounted in place relative to the cup body 10, the cutter locking block 20 may still be loosened during long-term use, thereby resulting in the loosening of the cutter 30. In order to solve the technical problem, as shown in FIG. 2 and FIG. 3, the embodiment further provides the food processor 1000, in which a blocking portion 2001 protrudes from a side of the base 200 facing the cup body 10. When the cup body 10 is assembled to the base 200, if the cutter locking block 20 is not mounted in place with respect to the cup body 10(For example, the cutter locking block 20 is located at the position indicated by the dotted line in FIG. 4), the blocking portion 2001 will interfere with the cutter locking block 20, as a result, the cup body 10 cannot be completely adapted to the base 200. In other words, only when the cutter locking block 20 is mounted in place relative to the cup body 10 (for example, the cutter locking block 20 is located at the position indicated by the solid line in FIG. 4), the blocking portion 2001 will not interfere with a downward movement of the cutter locking block 20 relative to the base 200 with the cup body 10, so as to ensure the normal assembly of the cup body 10 relative to the base 200. Moreover, because the blocking portion 2001 protrudes from the base 200, when the cup 10 is assembled to the base 200, the cutter locking block 20 will press the blocking portion 2001 in the circumferential direction, and the blocking portion 2001 can prevent the cutter locking block 20 from rotating relative to the cup body 10, thereby preventing the cutter 30 from loosening due to accidental rotation of the cutter locking block 20 during use of the cup assembly 100.

It should be noted that, the assembly of the cutter 30 in place relative to the cup body 10 means that the cutter 30 is locked relative to the cup body 10 to complete the assembly operation of the cutter. The cutter 30 is not assemble in place relative to the cup body 10 means that the cutter 30 is not locked relative to the cup body 10, including a state that the cutter 30 is not assemble relative to the cup body 10, a state that the sealing ring 50 is not assemble between the cutter 30 and the cup body 10,a state that the cutter 30 is assemble to the cutter locking block 20 but the cutter locking block 20 is not locked relative to the cup body 10, and the cutter locking block 20 is loosened relative to the cup body 10 after the cutter locking block 20 is locked relative to the cup body 10 in an initial stage.

Therefore, the food processor 1000 is provided with the blocking portion 2001 on the base 200, and by utilizing the mutual position interference between the blocking portion 2001 and the cutter locking block 20, it is not only effectively determine whether the cutter locking block 20 and the cutter 30 are assembled in place relative to the cup body 10, but also to ensure that the cutter locking block 20 is firmly assembled relative to the cup body 10, thereby improving the use safety and reducing the potential safety hazard.

As shown in FIG. 2 and FIG. 3, the blocking portion 2001 includes a protrusion protruding from the base 200. When the cutter locking block 20 is not assembled in place, when the cup body 10 is vertically placed on the base 200, the cutter locking block 20 will overlap on the protrusion, thereby causing assembly interference. Only when the cutter locking block 20 is assembled in place relative to the cup body 10, the cutter locking block 20 is not located on the protrusion relative to the base 200, and the cup body 10 can be normally assembled relative to the base 200, so that the user can timely determine whether the cutter locking block 20 is assembled in place relative to the cup body 10 and whether the cutter 30 is assembled in place relative to the cutter locking block 20. Moreover, even when the food processor 1000 is in use, the protrusion constantly blocks the cutter locking block 20 from rotating and loosening, and correspondingly the cutter 30 remains locked, which further improves the use safety of the food processor 1000.

As shown in FIGS. 1 to 3, in some embodiments, a side of the base 200 facing the cup body 10 is provided with a receiving portion, and the receiving portion is configured to be connected to the bottom of the cup body 10. The receiving portion may be a tray 2002 protruding from the base 200, or a receiving groove recessed along a thickness direction of the base 200, or even a planar area on the base 200. Regardless of the configuration, it only needs to ensure that the bottom of the cup body 10 can be connected to the receiving portion to realize the assembly of the cup body 10 relative to the base 200.

Taking the tray 2002 protruding from the base 200 as the receiving portion as an example, the tray 2002 has a bowl-shaped structure. When the cup body 10 is assembled relative to the base 200, the bottom of the cup body 10 can just be accommodated in the tray 2002, and an inner sidewall of the tray 2002 is just in clearance fit with or attached to an outer sidewall of the cup body 10, and the protrusion is provided inside the tray 2002. When the cup body 10 is placed in the tray 2002, the accommodating groove 12 on a lower side wall of the cup body 10 can be placed in the tray 2002, thereby protecting the holding arm 22 located in the accommodating groove 12.

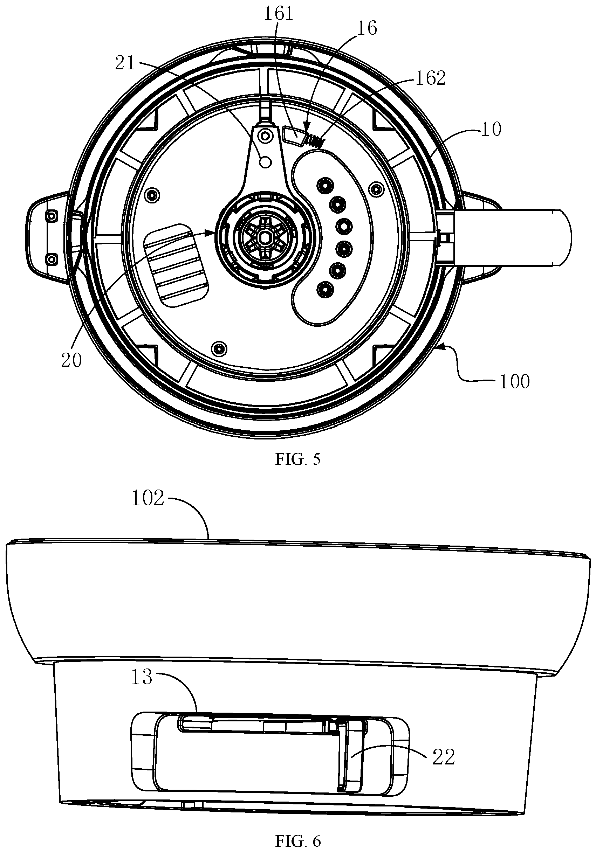

As shown in FIG. 5 and FIG. 12, in an optional embodiment, a pushing member 16 is further mounted on the partition plate 17 of the cup body 10, and the pushing member 16 can push the cutter locking block 20 to rotate circumferentially relative to the cup body 10. For example, when the cutter 30 is assembled in place to the cup body 10 through the locking block 20, a locking force between the cutter locking block 20 and the cup bottom 11 is equal to or greater than a pushing force of the pushing member 16 acting on the cutter locking block 20, and the cutter locking block 20 is assembled in place and does not rotate. When the cup body 10 is not assembled in place, the locking force between the cutter locking block 20 and the cup bottom 11 is less than the pushing force of the pushing member 16 acting on the cutter locking block 20, so that the pushing member 16 pushes the cutter locking block 20 to rotate relative to the cup body 10 to deviate from an in-place position. If the cup body 10 is assembled to the base 200 at this time, the cutter locking block 20 will interfere with the protrusion on the base 200, thus hindering the assembly operation of the cup body 10 and the base 200. In this way, the user may be prompted to assemble the cutter 30 or assemble the cutter 30 in place in the event that the cutter 30 is not assemble or not assemble in place, thereby further improving the use safety of the cup assembly 100. In addition, even if the user drives the cutter locking block 20 to rotate to the in-place position by pulling the holding arm 22. When the cup body 10 is assembled relative to the base 200, there is no extra space between the cup body 10 and the tray 2002 due to the blocking effect of the tray 2002, so that the holding arm 22 can continue to be pulled. Therefore, when the user's hand removes from the holding arm 22, the pushing member 16 can push the cutter locking block 20 away from the in-place position and interfere with the protrusion. The protrusion extends in a fan-shaped ring along the circumferential direction of the tray 2002, so as to ensure that the cutter locking block 20 can interfere with the protrusion at any position after being pushed away from the in-place position by the pushing member 16. Of course, the protrusion may also be a square block structure, as long as it can interfere with the cutter locking block 20.

As shown in FIGS. 5 and 12, in actual use, the pushing member 16 includes a pushing block 161 and a first elastic member 162 connected to the pushing block 161. An end of the first elastic member 162 away from the pushing block 161 is connected to the cup body 10. The first elastic member 162 is a spring. The partition plate 17 is provided with a positioning groove, one end of the first elastic member 162 abuts against a sidewall of the positioning groove along the axial direction of the cup body 10, and the other end of the first elastic member 162 abuts against the pushing block 161. In an embodiment, a side the pushing block 161 facing the first elastic member 162 is provided with a guiding post, and the first elastic member 162 is sleeved on the guiding post. The configuration of the first elastic member 162 enables the pushing block 161 to always have a pushing force in a direction away from the positioning groove, that is, to always have a pushing force to push the cutter locking block 20.

The above-mentioned embodiments do not constitute a limitation on the protection scope of the technical solution. Any modifications, equivalent replacements and improvements made within the spirit and principles of the above-mentioned embodiments shall be included within the protection scope of this technical solution. The foregoing descriptions are merely specific embodiments of the present invention, but are not intended to limit the protection scope of the present invention. Any variation or replacement readily figured out by a person skilled in the art within the technical scope disclosed in the present invention shall all fall within the protection scope of the present invention.

## Claims

1. A food processor, comprising a base (200) configured to assemble a cup body (10);
wherein the base (200) is provided with a tray (2002) protruding from the base (200), and the tray (2002) is provided with a blocking portion (2001) protruding in the tray (2002);
wherein a bottom of the cup body (10) is capable of being received in the tray (2002), the cup body (10) is provided with a cutter (30) and a cutter locking block (20) configured to mount the cutter (30) on the cup body (10), the cutter locking block (20) is movably connected to the cup body (10) and capable of rotating circumferentially relative to the cup body (10);
in a first state of the cutter (30), the cutter (30) is not assembled in place relative to the cup body (10), and the cutter locking block (20) is overlapped with the blocking portion (2001);
in a second state of the cutter (30), the cutter (30) is assembled in place relative to the cup body (10), and the cutter locking block (20) is rotated to a position circumferentially deviating from the blocking portion (2001).

2. The food processor according to claim 1, wherein the blocking portion (2001) extends along at least a part of a rotation path of the cutter locking block (20).

3. The food processor according to claim 1 or 2, further comprising a pushing member (16) mounted on the cup body (10), wherein the pushing element (16) is capable of applying a pushing force to the cutter locking block (20) in a direction opposite to a locking direction of the cutter locking block (20);
in the first state, the pushing member (16) pushes the cutter locking block (20) to rotate to a position overlapping with the blocking portion (2001);
in the second state, the pushing force of the pushing member (16) is equal to or less than a locking force of the cutter locking block (20) relative to a cup bottom (11) of the cup body (10).

4. The food processor according to claim 3, wherein the pushing member (16) comprises a pushing block (161) and a first elastic member (162) connected to the pushing block (161), and an end of the first elastic member (162) away from the pushing block (161) is connected to the cup body (10).

5. The food processor according to any one of claims 1 to 4, wherein the cutter locking block (20) comprises a locking portion and an extension arm (21) connected to the locking portion, the locking portion is provided with an accommodating cavity (25) extending along an axial direction thereof, the cutter (30) extends through the cup bottom (11) of the cup body (10) and the accommodating cavity (25) and is assembled to the cup body (10) through the cutter locking block (20);
in the first state of the cutter (30), the extension arm (21) is overlapped with the blocking portion (2001); in the second state of the cutter (30), the extension arm (21) abuts against the blocking portion (2001).

6. The food processor according to claim 5, wherein a side wall of the accommodating cavity (25) is provided with a first locking slope, the cutter (30) comprises a cutter seat (32) and a cutter body (31) mounted at an end of the cutter seat (32), and the cutter seat (32) is provided with a locking protrusion (321) extending outward along a radial direction thereof;
the cutter seat (32) is capable of extending through the accommodating cavity (25) and the cup bottom (11); when the cutter locking block (20) rotates along a first direction, the locking protrusion (321) presses the first locking slope, and the cutter (30) is locked relative to the cup body (10); when the cutter locking block (20) rotates along a second direction, the locking protrusion (321) is disengaged from the first locking slope, and the cutter (30) is unlocked relative to the cup body (10).

7. The food processor according to claim 5, further comprising a locking ring (40) provided in the accommodating cavity (25);
wherein the locking ring (40) is capable of rotating simultaneously with the cutter locking block (20) and moving along an axis of the cutter locking block (20) relative to the cutter locking block (20), and an inner wall of the locking ring (40) is provided with a second locking slope (411);
the cutter comprises a cutter seat (32) and a cutter body (31) mounted at an end of the cutter seat (32), and the cutter seat (32) is provided with a locking protrusion (321) extending outwards along a radial direction thereof;
the cutter seat (32)is capable of extending through the locking ring (40) and the cup bottom (11); when the cutter locking block (20) rotates along a first direction, the locking protrusion (321) abuts against the second locking slope (411), and the cutter (30) is locked relative to the cup body (10); when the cutter locking block (20) rotates along a second direction, the locking protrusion (321) is disengaged from the second locking slope (411), and the cutter (30) is unlocked relative to the cup body (10).

8. The food processor according to claim 6 or 7, wherein the cup body (11) has a mounting hole (111) allowing the cutter seat (32) to extend through, an edge of the mounting hole (111) is provided with a notch (1111), and the locking protrusion (321) is capable of extending through the notch (1111) to press the first locking slope or the second locking slope (411).

9. The food processor according to claim 8, wherein the cutter seat (32) is of a polygonal prism structure, and the mounting hole (111) is in a polygonal shape adapted to the cutter seat (32).

10. The food processor according to claim 7, wherein a side of the cutter locking block (20) facing a cup opening is provided with a flange (24), an end of the locking ring (40) is capable of pressing the flange (24), and a second elastic member (70) is provided between the flange (24) and the locking ring (40);
in the first state, the second elastic member (70) is in a loose state;
in the second state, the second elastic member (70) is compressed between the flange (24) and the locking ring (40).

11. The food processor according to claim 6, wherein a side of the cutter (30) facing the cup bottom is provided with a sealing ring (50);
in the second state, the seal ring (50) is pressed between the cutter (30) and the cup bottom (11).
